## Europäisches Patentamt

## European Patent Office

## Office européen des brevets

(19)

(11) Veröffentlichungsnummer: **0 166 412**

**B1**

(12)

# EUROPÄISCHE PATENTSCHRIFT

(45) Veröffentlichungstag der Patentschrift:
21.09.88

(51) Int. Cl.⁴: **C 04 B 35/58**

(21) Anmeldenummer: **85107801.4**

(22) Anmeldetag: **25.06.85**

(54) Polykristalline Sinterkörper auf Basis von Siliciumnitrid und Sinteradditiven.

(30) Priorität: **27.06.84 DE 3423573**

(43) Veröffentlichungstag der Anmeldung:
**02.01.86 Patentblatt 86/1**

(45) Bekanntmachung des Hinweises auf die Patenterteilung:
**21.09.88 Patentblatt 88/38**

(84) Benannte Vertragsstaaten:
**AT BE CH DE FR GB IT LI NL SE**

(56) Entgegenhaltungen:
WO-A-85/00593
DE-A-2 351 163
US-A-4 264 550

CHEMICAL ABSTRACTS, Band 90, Nr. 14, 2. April
1979, Seite 295, Nr. 108536b, Columbus, Ohio, US;
J.E. WESTON et al.: "Crystallization of grain
boundary phases in hot-pressed silicon nitride
materials. Part 1. Preparation and characterization
of materials" & J. MATER. SCI. 1978, 13(10), 2137-46
IDEM
CERAMIC ENGINEERING AND SCIENCE
PROCEEDINGS, Band 5, Nr. 5/6, Mai-Juni 1984,
Seiten 385-396, Columbus, Ohio, US; A.E. PASTO:
"Silicon nitride-cordierite composites for Diesel
engine applications"
CHEMICAL ABSTRACTS, Band 86, Nr. 8, Februar
1977, Seite 191, Nr. 46587a, Columbus, Ohio, US; TAI-

(73) Patentinhaber: **Elektroschmelzwerk Kempten
GmbH, Herzog- Wilhelm- Strasse 16, D-8000
München 2 (DE)**

(72) Erfinder: **Steinmann, Detlef, Dr. Dipl. Ing.,
Schorenstrasse 18, D-8961 Buchenberg (DE)**
Erfinder: **Lipp, Alfred, Dr. Dipl.- Chem.,
Bürgermeister- Singer- Strasse 15, D-8939 Bad
Wörishofen (DE)**

(56) Entgegenhaltungen: (Fortsetzung)
II MAH: "Densification studies of silicon nitride" &
DISS. ABSTR. INT. B 1976, 37(5), 2400

**Beschreibung**

Sinterkörper aus polykristallinem Siliciumnitrid, die unter Mitverwendung von Sinteradditiven auf Oxidbasis hochverdichtet worden sind, sind bekannt. Sie zeichnen sich insbesondere durch eine hohe Festigkeit bei Raumtemperatur, hohe Bruchzähigkeit, geringe thermische Ausdehnung und ein sehr gutes Verschleißverhalten aus. Diese Sinterkörper wurden aus Siliciumnitridpulvern zusammen mit den Sinteradditiven nach üblichen bekannten Sinterverfahren mit und ohne Druckanwendung hergestellt. Als Sinteradditive wurden insbesondere solche auf Oxidbasis verwendet, wobei sich Magnesiumoxid, Yttriumoxid und andere Oxide Seltener Erden besonders bewährt haben, die einzeln oder im Gemisch oder in Form von vorgesinterten Mischoxiden vom Spinelltyp eingesetzt worden sind. Je nach Art und Menge der verwendeten Sinteradditive und in Abhängigkeit von dem jeweils angewendeten Sinterverfahren wurden dabei dichte bis hochdichte Sinterkörper erhalten, die sich durch eine gute bis sehr gute Biegefestigkeit bei Raumtemperatur auszeichneten (vgl. US-A-3 950 464, US-A-4 004 937 und US-A-4 180 410 die der DE-C-2 620 694 entspricht).

Es ist jedoch ebenfalls bekannt, daß derartige Sinterkörper auf Siliciumnitridbasis, die unter Verwendung dieser bekannten Oxide oder Mischoxide hergestellt worden sind, im allgemeinen eine schlechte Hochtemperaturfestigkeit zeigen, worunter zu verstehen ist, daß ihre Biegefestigkeit bei etwa 1300°C um mehr als 50 % des bei Raumtemperatur gemessenen Wertes abfällt. Diese Abnahme der Biegefestigkeit wurde auf das Vorhandensein von nicht-kristallinen Substanzen, das heißt von glasartigen Phasen an den Korngrenzen zurückgeführt.

Da eine schlechte Hochtemperaturfestigkeit die Einsatzmöglichkeiten der Sinterkörper als Bauteile, die hohen Temperaturen unter hoher Belastung ausgesetzt sind, entscheidend einschränkt, sind zahlreiche Vorschläge bekannt geworden, wodurch die Bildung dieser unterwünschten intergranularen glasartigen Phasen entweder von vornherein verhindert oder diese nachträglich in kristalline Phasen umgewandelt werden sollen.

So soll beispielsweise die Bildung von kristallinen Phasen aus $Si_3N_4 \cdot nY_2O_3$, wobei n 1, 2 und/oder 3 bedeutet, dadurch erreicht werden können, daß vorgepresste Körper aus Siliciumnitrid und Yttriumoxidpulver in Gegenwart von Aluminiumnitrid mit und/oder ohne Druckanwendung bei Temperaturen von 1650° bis 1800°C gesintert werden. Die Reinheit des verwendeten Siliciumnitridausgangspulvers war hierbei nicht entscheidend, das heißt, geringe Mengen an Verunreinigungen wie Eisen, Aluminium oder Calcium konnten toleriert werden. Die zugesetzten Mengen an Yttriumoxid sollten jedoch vorteilhaft weniger als 5 Gewichtsprozent betragen (vgl. US-A-4 046 580, die im wesentlichen der DE-B-2 528 869 entspricht).

Ein anderer Weg wurde in der US-A-4 102 698 gezeigt, wonach Siliciumnitrid-, Yttriumoxid- und Siliciumdioxid-Pulvergemische von ganz bestimmter Zusammensetzung unter Druckanwendung gesintert wurden. Die Mengen entsprachen dabei einer bestimmten Fläche in dem ternären System $Si_3N_4$-$Y_2O_3$-$SiO_2$, da nur dadurch die Bildung von instabilen Verbindungen ausgeschlossen sein sollte. Aus den angegebenen Daten für die Biegefestigkeit bei Raumtemperatur und bei 1400°C ist jedoch noch immer ein beträchtlicher Abfall ersichtlich.

Eine weitere Verbesserung in dieser Richtung sollte dadurch erzielt werden, daß sehr reine Pulvergemische bestimmter Zusammensetzung verwendet wurden, deren Mengen nunmehr einer bestimmten Fläche in dem ternären System $Si_3N_4$-$SiO_2$-$M_2O_3$ entsprachen, wobei M aus mindestens zwei verschiedenen Komponenten besteht, die alle einen Ionenradius von weniger als 0,89 A° haben müssen. Für die Herstellung der Sinterkörper können die einzelnen Oxide zusammen mit $Si_3N_4$-Pulver heißgepresst oder heißisostatisch verdichtet werden. Die Oxide können jedoch auch unter Bildung eines Pyrosilicats geschmolzen und dieses mit dem $Si_3N_4$-Pulver vor dem Heißpressen vermischt werden (vgl. US-A-4 234 343).

Zur Erleichterung der Ausbildung einer kristallinen Phase anstelle der unerwünschten glasartigen intergranularen Phasen ist ferner die Mitverwendung von Keimbildnern in sehr geringen Mengen bekannt geworden, wie Eisen und Titan in elementarer Form oder als Oxide und Nitride (vgl. US-A-4 179 301) oder von Wolframcarbid, Titancarbid und Aluminiumoxid, die als Mahlabrieb bei der Herstellung der homogenen Pulvermischung eingebracht werden können (vgl. US-A-4 401 617 und EP-A-9859). Das Einbringen der Sinteradditive selbst als Mahlabrieb unter Verwendung von Mahlkörpern, die aus einem Oxid oder Silicat bestehen, ist ebenfalls bereits bekannt geworden (vgl. DE-A-2 800 174). Daneben wurde auch versucht, anstelle von Yttriumoxid, das allgemein als eines der wirksamsten Sinteradditive angesehen wird, eine hochschmelzende Zirkonverbindung zu verwenden, wobei sich Zirkoniumsilikat bewährt haben soll (vgl. US-A-4 069 059). Außerdem sollen die Materialeigenschaften von Sinterkörpern aus Siliciumnitrid dadurch verbessert werden können, wenn als Sinteradditive neben Yttriumoxid zusätzlich Lithiumoxid oder Aluminiumoxid und Eisenoxid mitverwendet werden. Hier wird darauf hingewiesen, daß durch den gezielten Zusatz dieser Bestandteile eine drastische Verschlechterung der Eigenschaften durch Oxidation vermieden werden kann und zwar sowohl bei Raumtemperatur als auch bei hohen Temperaturen im Kurzzeit- und auch im Langzeitverhalten (vgl. EP-A-45518).

Die US-A-4 264 550 befaßt sich mit einem Verfahren zur Herstellung von Siliciumnitridsinterkörpern, bei dem reines Siliciumnitridpulver (Kationen-Verunreinigungen vorteilhaft < 0,5 %), von welchem mindestens 85 % in der α-Phase vorliegen und die eine Oberflächenbeschichtung aus $SiO_2$ aufweisen mit Yttriumoxid als Sinteradditiv und einem die Keimbildung katalysierenden Zusatz, wie insbesondere Aluminiumoxid vermischt und heißgepresst werden, mit der Maßgabe, daß vor dem eigentlichen Heißpressvorgang eine zusätzliche Wärmebehandlung unter einem bestimmten Druck vorgenommen wird. Durch diese zusätzliche Wärmebehandlung soll in Verbindung mit dem keimbildenden Zusatz eine Keimbildung eingeleitet oder ausgelöst werden, sodaß das nach dem Heißpressen erhaltene Endprodukt mit mindestens 99 % TD eine primäre Matrixphase aus $\beta$-$Si_3N_4$ und kristalline sekundäre Phasen an den Korngrenzen der Matrix aufweist, die vorwiegend aus Siliciumoxynitriden bestehen. Zahlenmäßige Angaben über die mechanischen Eigenschaften dieser Körper fehlen, es wird nur erwähnt, daß mit der zusätzlichen Wärmebehandlung hergestellte Schneidwerkstoffe eine annehmbare Lebensdauer haben, im Gegensatz zu solchen, die unter sonst gleichen Bedingungen, jedoch ohne diese zusätzliche Wärmebehandlung hergestellt worden sind. Außerdem wurde durch röntgenographische Analyse das Vorhandensein von kristallinen Yttriumsiliciumoxynitriden festgestellt, die bei dem konventionell hergestellten Körper fehlten.

Diesem umfangreichen Stand der Technik ist zu entnehmen, daß das angestrebte Ziel bei der Sinterung von Siliciumnitrid die Bildung von sekundären kristallinen intergranularen Phasen anstelle von glasartigen Phasen, die als Hauptursache für schlechte Hochtemperatureigenschaften angesehen werden, durch gezielte Maßnahmen erreicht werden soll, wie Hitzebehandlung in Gegenwart von Aluminiumnitrid, begrenzte Auswahl hinsichtlich Art und Menge der verwendeten Sinteradditive, Verwendung von sehr reinen Siliciumnitridausgangspulvern, sowie Mitverwendung von Keimbildnern, auch in Verbindung mit einer zusätzlichen Wärmebehandlung oder anderen Substanzen. Abgesehen davon, daß die einzelnen Maßnahmen teilweise mit hohem Aufwand verbunden sind, garantieren sie nicht die Kombination folgender Eigenschaften in den fertigen Sinterkörpern auf Basis von Siliciumnitrid:
(1) hohe Dichte;
(2) hohe mechanische Festigkeit bei Raumtemperatur und geringer Festigkeitsabfall mit der Temperatur und
(3) lange Lebensdauer, das heißt, geringer Festigkeitsabfall mit der Zeit.

Es stellt sich somit die Aufgabe, polykristalline Sinterkörper auf Basis von Siliciumnitrid und Sinteradditiven zur Verfügung zu stellen, die diese Kombination von Eigenschaften besitzen.

Diese Aufgabe wird erfindungsgemäß durch polykristalline Sinterkörper, die aus mindestens 50 Gew.-% einer kristallinen Siliciumnitridphase, von der mindestens 90 Gew.-% in der $\beta$-Modifikation vorliegen und aus mindestens einer sekundären, kristallinen, intergranularen Silicatphase bestehen, mit einer Dichte von mindestens 99 % der theoretisch möglichen Dichte gelöst, welche dadurch gekennzeichnet sind, daß sie aus Siliciumnitridpulvern unter Verwendung von kristallinen Silicaten natürlicher oder synthetischer Herkunft mit Schmelzpunkten im Bereich von 1350°C bis 1950°C als Sinteradditive in Verbindung mit Keimbildnern ausgewählt aus der Gruppe der Metallcarbide mit Schmelzpunkten ab 1500°C durch Sintern mit oder ohne Druckanwendung hergestellt worden sind mit folgender Eigenschaftskombination:
a) Elastizitätsmodul bei Raumtemperatur von < 300 KN/mm$^2$,
b) Kurzzeitbiegefestigkeit bei Raumtemperatur von mindestens 600 N/mm$^2$, gemessen nach der 4-Punkt-Methode, die bis 1200°C um weniger als 50 % abfällt und
c) Langzeitbiegefestigkeit, gemessen nach der 4-Punkt-Methode, bei jeweils konstanter Belastung, die durch den daraus berechneten Zahlenwert von > 40 bei 1200°C für den Rißempfindlichkeitsparameter n charakterisiert ist.

Die erfindungsgemäßen polykristallinen Sinterkörper können durch Sintern mit oder ohne Druckanwendung der Siliciumnitridpulver, Sinteradditive und Keimbildner dadurch hergestellt werden, daß als Ausgangsmaterial homogene Pulvergemische aus mindestens 50 Gew.-% Siliciumnitrid, von dem mindestens 80 Gew.-% in der $\alpha$-Modifikation vorliegen, mit einem Anteil von Verunreinigungen in Form von Oxiden und freiem Kohlenstoff von nicht mehr als 4,0 Gew.-% einer spezifischen Oberfläche von 3 bis 15 m$^2$/g (gemessen nach BET), höchstens 49,5 Gew.-% der kristallinen Silicate und mindestens 0,5 Gew.-% der Carbidkeimbildner mit durchschnittlichen Teilchengrößen von < 2 $\mu$m verwendet werden.

Als kristalline Silicate mit Schmelzpunkten im definierten Bereich, vorzugsweise im Bereich von 1400°C bis 1900°C, werden vorteilhaft solche aus der Gruppe der Neso-, Soro-, Cyclo-, Ino-, Phyllo- und Tektosilicate mit Ausnahme von Quarz ausgewählt.

Beispiele für kristalline Silicate natürlicher Herkunft sind
Ca-Mg-silicate, wie $CaMg(Si_2O_6)$ (Diopsid),
$\qquad$ $Ca_2Mg(Si_2O_7)$ (Akermanit),
Mg-silicate, wie $\quad$ $Mg_2(SiO_4)$ (Forsterit), $Mg_3(Si_4O_{10})(OCH)_2$ (Talk)
Mg-Fe-silicate, wie $(Mg, Fe)_2(SiO_4)$ (Olivin)
K-Al-silicate, wie $\quad$ $KAl_2((OH,F)_2/AlSi_3O_{10})$ (Muskovit),
Al-silicate, wie $\quad$ $Al_2((OH)_2/Si_4O_{10})$ (Pyrophillit),
Na-Al-silicate wie $Na_2Al_2(Si_2O_8)$ (Nephelit) und
Al-Be-silicate, wie $Al_2Be_3(Si_6O_{18})$ (Beryll).
Beispiele für kristalline Silicate synthetischer Herkunft sind
Ca-Al-silicate wie $CaAl_2(Si_2O_8)$, hergestellt aus $CaO \times Al_2O_3 \times 2SiO_2$;
Y-N-silicate wie $Y_4N_2(Si_2O_7)$ oder $Y_2AlN(SiO_5)$, hergestellt aus $Si_2ON_2 \times 2Y_2O_3$ oder aus $AlN \times SiO_2 \times Y_2O_3$.

Als Metallcarbide mit Schmelzpunkten im definierten Bereich werden vorteilhaft solche mit Metallatomen aus den Gruppen 4b,5b und 6b des Periodischen Systems, sowie Bor und Silicium ausgewählt.

Beispiele für Metallcarbide sind TiC, ZrC WC, TaC, CrC,VC, sowie $B_4C$ und SiC.

Für die Auswahl der Keimbildner ist entscheidend, daß sie bei den angewendeten Sintertemperaturen nicht

3

schmelzen und weder mit den kristallinen Silicaten noch mit dem Siliciumnitrid und den darin enthaltenen Verunreinigungen (z. B. Fe) reagieren. Die durchschnittliche Ausgangsteilchengröße der Keimbildner ist definitionsgemäß < 2 µm, vorzugsweise < 1 µ mit maximalen Teilchengrößen bis zu etwa 10 µm.

Für die Herstellung der erfindungsgemäßen Sinterkörper können Siliciumnitridpulver von üblicher Feinheit und Reinheit eingesetzt werden, das heißt, es sind weder besonders feine noch besonders reine Pulverqualitäten erforderlich. Handelsübliche Pulver, mit einem Anteil von mindestens 80 Gewichtsprozent $Si_3N_4$ in der α-Modifikation und von Verunreinigungen in Form von Oxiden und freiem Kohlenstoff von nicht mehr als 4,0 Gewichtsprozent, mit maximalen Teilchengrößen bis zu etwa 15 µm, das heißt mit einer spezifischen Oberfläche im Bereich von etwa 3 bis 15 m²/g (gemessen nach BET) sind verwendbar. Richtwerte für Verunreinigungen, die toleriert werden können sind

| | | |
|---|---|---|
| CaO | $\leqslant$ 0,4 | Gew.-% |
| MgO | $\leqslant$ 0,2 | " |
| $Na_2O$ | $\leqslant$ 0,1 | " |
| $K_2O$ | $\leqslant$ 0,1 | " |
| $Li_2O$ | $\leqslant$ 0,1 | " |
| $Al_2O_3$ | $\leqslant$ 1,1 | " |
| $Fe_2O_3$ | $\leqslant$ 1,5 | " |
| $TiO_2$ | $\leqslant$ 0,1 | " und |
| $C_{frei}$ | $\leqslant$ 0,4 | " |

Die Siliciumnitridpulver werden mit den ausgewählten kristallinen Silicaten und den Keimbildnern gemeinsam mit Hilfe üblicher Maßnahmen homogen vermischt. Für die Ausbildung der sekundären kristallinen intergranularen Silicatphasen im fertigen Sinterkörper ist dabei keine mengenmäßige Begrenzung der als Sinteradditive zugefügten kristallinen Silicate notwendig, das heißt, in dem homogenen Ausgangspulvergemisch kann der Anteil der kristallinen Silicate bis zu 49,5 Gewichtsprozent betragen und der Anteil der Keimbildner liegt bei mindestens 0,5 Gewichtsprozent, bezogen auf das Gesamtgewicht. Vorteilhaft werden 5 bis 40 Gewichtsprozent der kristallinen Silicate und 2 bis 15 Gewichtsprozent der Keimbildner verwendet, wobei sich Titancarbid als Keimbildner besonders bewährt hat. Das homogene Vermischen wird vorteilhaft durch Vermahlen in Gegenwart eines organischen Lösungsmittels durchgeführt, wie Methanol, Toluol oder Cyclohexan. Anstelle der fertigen Ausgangspulver können Silicate und Keimbildner jedoch auch mit Siliciumpulver homogen vermahlen und anschließend gemeinsam nitridiert werden. Hierdurch wird eine besonders gleichmäßige Verteilung von Sinteradditiven und Keimbildnern im Siliciumnitrid erreicht.

Diese homogenen Ausgangspulvergemische werden anschließend nach üblichen bekannten Verfahren mit oder ohne Druckanwendung gesintert. Die Verfahrensparameter, wie Temperatur, Haltezeit und gegebenenfalls Druck werden dabei vorteilhaft so gewählt, daß sie nicht nur für eine hohe Verdichtung des zu sinternden Körpers ausreichend sind, sondern gleichzeitig auch für die praktisch vollständige Umwandlung der α-Modifikation des Siliciumnitrids in die β-Modifikation.

Für die einzelnen Sinterverfahren haben sich dabei folgende Verfahrensparameter besonders bewährt:

1.  Sintern ohne Druckanwendung unter einer Pulverschüttung aus Siliciumnitrid oder Siliciumnitrid und Bornitrid; Temperatur maximal 1900°C; Haltezeit in Abhängigkeit von der Wandstärke des zu sinternden Körpers von 10 bis 40 mm: 1 bis 6 Stunden.
2.  Sintern unter stationärem Stickstoffdruck von mindestens 2 Mpa; Temperatur maximal 2150°C; Haltezeit bei Wandstärken von 10 bis 40 mm: 1 bis 3 Stunden.
3.  Heißpressen unter Stempeldruck in Gegenwart von Stickstoff unter Normaldruck oder unter Vakuum; Temperatur maximal 1850°C; Haltezeit bei einer Wandstärke von 10 bis 40 mm: 1 bis 1,5 Stunden.
4.  Heißisostatischpressen unter Stickstoffdruck bis 200 Mpa; Temperatur maximal 1900°C; Haltezeit bei einer Wandstärke von 10 bis 40 mm: 1 bis 1,5 Stunden.

Die erfindungsgemäß unter Verwendung der kristallinen Silicate und Keimbildner hergestellten polykristallinen Sinterkörper haben unabhängig von dem im einzelnen angewendeten Sinterverfahren eine Dichte von > 99 % der theoretisch möglichen Dichte und einen Elastizitätsmodul von > 300 KN/mm², der insbesondere als Maß für eine sehr gute Thermoschockbeständigkeit gilt. Sie haben eine hohe mechanische Festigkeit bei Raumtemperatur und einen geringen Festigkeitsabfall mit der Temperatur, nachgewiesen durch eine Kurzzeitbiegefestigkeit bei Raumtemperatur von mindestens 600 N/mm², gemessen nach der 4-Punkt-Methode, die bis 1200°C um weniger als 50 %, vorzugsweise um weniger als 40 % agfällt und sie haben eine lange Lebensdauer oder Standzeit bei Einsatz unter Belastung, weil sie nur einen geringen Festigkeitsabfall mit der Zeit zeigen, nicht nur bei Raumtemperatur, sondern auch bei Temperaturen bis zu 1200°C, nachgewiesen durch eine Langzeitbiegefestigkeit, gemessen nach der 4-Punkt-Methode, bei jeweils konstanter Belastung, die durch den daraus berechneten Zahlenwert von > 40 bei 1200°C für den Rißempfindlichkeitsparameter n charakterisiert ist.

Der Festigkeitsabfall mit der Zeit wurde durch Standzeitversuche und mit der 4-Punkt-Belastung bei jeweils vorgegebener Temperatur und vorgegebener Belastung ermittelt. Aus diesen Daten wurde der Rißempfindlichkeitsparamter n errechnet.

Dieser Rißempfindlichkeitsparameter n dient als Maß für das langsame Rißwachstum, bzw. für die statische Ermüdung des Materials unter Dauerbelastung bei der jeweils angewendeten Temperatur. Hohe Werte für n, insbesondere bei hohen Temperaturen von > 40 bei 1200°C bedeuten, daß die Festigkeit bei diesen hohen Temperaturen durch Kriechvorgänge (zeitabhängige, bleibende plastische Verformung) und langsames Rißwachstum (zeitabhängige Rißverlängerung) mit der Zeit nur langsam abnimmt.

Die erfindungsgemäß unter Verwendung der kristallinen Silicate und Keimbildner hergestellten polykristallinen Siliciumnitridsinterkörper sind insbesondere hinsichtlich ihrer Langzeitfestigkeit solchen, die gemäß dem Stand der Technik unter Verwendung von einem oder mehreren Oxiden hergestellt worden sind, eindeutig überlegen, wie durch Vergleichsversuche nachgewiesen werden konnte.

In den folgenden Beispielen wurden nach den Sinterverfahren 1 bis 4 polykristalline Sinterkörper unter erfindungsgemäßer Verwendung von kristallinen Silicaten und Keimbildnern und zum Vergleich unter Verwendung von verschiedenen Oxiden hergestellt und hinsichtlich ihrer Eigenschaften untersucht.

## Beispiele

Siliciumnitridausgangspulver mit folgender Analyse wurden verwendet

| | Pulver A Gew.-% | Pulver B Gew.-% |
|---|---|---|
| $\alpha$ - $Si_3N_4$ | 87 | 80 |
| $\beta$ - $Si_3N_4$ | 2,5 | 3 |
| $O_2$ | 1,63 | 2,01 |
| C | 0,21 | 0,39 |
| Al | 0,15 | 0,85 |
| Fe | 0,21 | 1,37 |
| Ca | 0,14 | 0,34 |
| Mg | $\leqslant$ 0,05 | $\leqslant$ 0,05 |
| Zr | $\leqslant$ 0,05 | $\leqslant$ 0,05 |
| Ti | 0,02 | 0,04 |
| Na | $\leqslant$ 0,02 | $\leqslant$ 0,03 |
| K | $\leqslant$ 0,02 | 0,02 |
| $N_2$ | 36,05 | 33,25 |

Die Siliciumnitridpulver wurden mit den Sinteradditiven und den Keimbildnern in den angegebenen Mengen homogen vermischt und unter den jeweils angegebenen Bedingungen gesintert. Die Angabe der spezifischen Oberfläche nach BET bezieht sich auf die homogene Pulvermischung. Alle Prozentangaben beziehen sich auf das Gewicht, sofern nichts anderes angegeben.

## Beispiel 1

Pulver A + 10 % Mg ($Si_2O_6$) + 1 % $Cr_3C_2$
spezifische Oberfläche: 3,7 $m^2$/g;
heißgepresst bei 1800°C/24,5 Mpa/Haltezeit: 1,5 Stunden.

## Beispiel 2

Pulver A + 5 % CaAl($Si_2O_8$) + 15 % TiC
spezifische Oberfläche: 4,1 $m^2$/g;
heißisostatisch gepreßt bei 1750°C/200 Mpa/Haltezeit: 1 Stunde.

## Beispiel 3

Pulver A + 5 % $Ca_2Mg(Si_2O_7)$ + 3 % WC
spezifische Oberfläche: 10,5 $m^2$/g;
heißgepreßt bei 1850°C/25 Mpa/Haltezeit: 1 Stunde

**Beispiel 4**

Pulver A + 10 % $Na_2Al_2(Si_2O_8)$ + 0,5 % TiC
spezifische Oberfläche: 14,3 m²/g;
gesintert unter Pulverschüttung bei 1920°C/$N_2$-strömend/ Haltezeit: 6 Stunden.

**Beispiel 5**

Pulver B + 5 % $(Mg, Fe)_2(SiO_4)$ + 0,5 % $B_4C$
spezifische Oberfläche: 9,8 m²/g;
heißgepreßt bei 1700°C/25 Mpa/Haltezeit: 1 Stunde.

**Beispiel 6**

Pulver B + 20 % $Al_2Be_3(Si_6O_{18})$ + 1 % SiC
spezifische Oberfläche: 12,0 m²/g;
gesintert bei 2150°C/10 Mpa $N_2$-Druck/Haltezeit: 1,5 Stunden.

**Beispiel 7**

Pulver B + 12 % $Y_2AlN(SiO_5)$ + 0,5 % VC
spezifische Oberfläche: 7,5 m²/g;
heißisostatisch gepreßt bei 1900°C/200 Mpa/Haltezeit: 1 Stunde.

**Beispiel 8**

Pulver B + 40 % $Y_4N_2(Si_2O_7)$ + 1 % TaC
spezifische Oberfläche: 14,4 m²/g
gesintert unter Pulverschüttung bei 1870°C/$N_2$-strömend/ Haltezeit: 6 Stunden.

**Beispiel 9**

Pulver A + 5 % $(Mg, Fe)_2(SiO_4)$ + 2 Gew.-% TiC
spezifische Oberfläche: 10 m²/g;
heißgepreßt bei 1700°C/25 MPa/Haltezeit: 1 Stunde.

**Beispiel 10**

Pulver A + 5 % $Mg_3(Si_4O_{10})(OH)_2$ + 15 Gew.-% TiC
spezifische Oberfläche: 12 m²/g;
heißgepreßt bei 1850°C/25 Mpa/Haltezeit: 1 Stunde.

**Vergleichsbeispiele:**

V1:  Pulver A + 5 % MgO
spezifische Oberfläche: 8 m²/g
heißgepreßt bei 1800°C/35 Mpa/Haltezeit: 1 Stunde.
V2:  Pulver A + 2 % MgO + 0,5 % $ZrO_2$
spezifische Oberfläche: 12 m²/g
heißgepreßt bei 1750°C/30 Mpa/Haltezeit: 1 Stunde

V3: Pulver A + 4,5 % MgO + 0,5 $ZrO_2$
spezifische Oberfläche: 10 $m^2/g$
heißgepreßt bei 1750°C/35 Mpa/Haltezeit: 1,5 Stunden.

V4: Pulver A + 2 % MgO + 0,4 % CaO + 0,5 % $ZrO_2$
spezifische Oberfläche: 11 $m^2/g$
heißgepreßt bei 1800°C/35 Mpa/Haltezeit: 1 Stunde.

V5: Pulver A + 11 % $Y_2O_3$
spezifische Oberfläche: 8 5 $m^2/g$
heißgepreßt bei 1800°C/35 Mpa/Haltezeit: 1 Stunde.

V6: Pulver A + 8 % $Y_2O_3$ + 2 % $Al_2O_3$
spezifische Oberfläche: 23 $m^2/g$
gesintert unter Pulverschüttung bei 1780°C/0,1 Mpa $N_2$/ Haltezeit: 6 Stunden.

V7: Pulver A + 8 % $Y_2O_3$ + 2 % $Al_2O_3$
spezifische Oberfläche: 25 $m^2/g$
gesintert bei 1800°C/5 Mpa $N_2$-Druck/Haltezeit: 5 Stunden.

V8: Pulver A + 8 % $Y_2O_3$ + 2 % $Al_2O_3$
spezifische Oberfläche: 23 $m^2/g$
heißisostatisch gepreßt bei 1800°C/200 Mpa/Haltezeit: 2 Stunden.

V9: Pulver B + 2,5 % MgO
spezifische Oberfläche: 12 $m^2/g$
heißgepreßt bei 1750°C/30 Mpa/Haltezeit: 1 Stunde.

V10: Pulver A + 5 % (CaO + MgO + $SiO_2$) im Molverhältnis 2 : 1 : 2
spezifische Oberfläche: 10 8 $m^2/g$
heißgepreßt bei 1850°C/25 Mpa/Haltezeit: 1 Stunde.

V10' : V10    40 Stunden nacherhitzt bei 1400°C/0,1 Mpa $N_2$.

Die in den Beispielen 1 bis 10 (E1 bis E10 erfindungsgemäß) und in den Vergleichsbeispielen 1 bis 10 (V1 bis V10) hergestellten Sinterkörper wurden hinsichtlich ihrer Eigenschaften untersucht. Die Ergebnisse sind in der folgenden Tabelle zusammengestellt.

Hierin bedeuten

$BF_{RT}$ =   Biegefestigkeit bei Raumtemperatur, gemessen nach der 4-Punkt-Methode

$BF_{1200°C}$ = Biegefestigkeit bei 1200°C, gemessen nach der 4-Punkt-Methode

% Abfall =   Abfall der Biegefestigkeit bei 1200°C in % gegenüber dem bei Raumtemperatur gemessenen Wert

$n_{RT}$ =   Rißempfindlichkeitsparameter n für das langsame Rißwachstum, bzw. für die statische Ermüdung bei Raumtemperatur

$n_{1200°C}$ = Rißempfindlichkeitsparameter n für das langsame Rißwachstum, bzw. für die statische Ermüdung bei 1200°C

E-Modul = Elastizitätsmodul bei Raumtemperatur

Anmerkung: Je größer n, desto langsamer nimmt die Festigkeit mit der Zeit ab, das heißt um so besser ist die Langzeitfestigkeit.

**Tabelle:**

| Beispiel Nr. | $BF_{RT}$ (N/mm²) | $BF_{1200°}$ (N/mm²) | Abfall % | $n_{RT}$ | $n_{1200°C}$ | E-modul (KN/mm²) |
|---|---|---|---|---|---|---|
| E 1 | 794 | 481 | 39 | > 100 | 47 | 277 |
| E 2 | 895 | 626 | 30 | 83 | 56 | 282 |
| E 3 | 690 | 433 | 37 | Δ 100 | 52 | 278 |
| E 4 | 648 | 495 | 24 | Δ 100 | 81 | 269 |
| E 5 | 686 | 425 | 38 | Δ 100 | 89 | 279 |
| E 6 | 720 | 501 | 30 | Δ 100 | 77 | 258 |
| E 7 | 914 | 517 | 43 | Δ 100 | 76 | 293 |
| E 8 | 844 | 639 | 24 | Δ 100 | 76 | 254 |
| E 9 | 863 | 622 | 28 | Δ 100 | 94 | 279 |
| E 10 | 915 | 701 | 23 | Δ 100 | 83 | 278 |
| V 1 | 713 | 413 | 42 | 56 | 26 | 319 |
| V 2 | 693 | 337 | 51 | Δ 100 | 18 | 317 |
| V 3 | 642 | 413 | 36 | Δ 100 | 27 | 322 |
| V 4 | 763 | 352 | 54 | Δ 100 | 22 | 314 |
| V 5 | 649 | 422 | 35 | 74 | 42 | 324 |
| V 6 | 614 | 311 | 49 | 83 | 36 | 317 |
| V 7 | 592 | 307 | 48 | 81 | 31 | 318 |
| V 8 | 659 | 306 | 54 | Δ 100 | 29 | 321 |
| V 9 | 667 | 287 | 57 | 71 | 17 | 320 |
| V 10 | 550 | 197 | 64 | 51 | 9 | 317 |
| V 10' | 485 | 228 | 53 | 48 | 14 | 315 |

**Bemerkung:**

In Beispiel 3 wurden 5 % Akermanit $Ca_2Mg(Si_2O_7)$ oder in anderer Schreibweise: $2CaO.MgO.2SiO_2$ zugesetzt. Im Vergleichsbeispiel 10 wurden die Oxide im gleichen Molverhältnis als Gemisch zugefügt. Unter den gleichen Heißpressbedingungen wie in Beispiel 3 war im Endprodukt kein Akermanit röntgenographisch nachweisbar. Selbst nach längerem Tempern (40 Stunden bei 1400°C = V 10') war kein Akermanit röntgenographisch nachweisbar. Die Eigenschaften hatten sich jedoch verändert. Für die Messung der in der Tabelle für V10' angegebenen Werte mußte jedoch erst eine 150 µm dicke poröse Oxidationsschicht abgeschliffen werden. Ohne Abschleifen dieser Schicht betrug die BF bei Raumtemperatur nur 213 N/mm².

**Patentansprüche**

1. Polykristalline Sinterkörper, die aus mindestens 50 Gew.-% einer kristallinen Siliciumnitridphase, von der mindestens 90 Gew.-% in der β-Modifikation vorliegen und aus mindestens einer sekundären, kristallinen, intergranularen Silicatphase bestehen,

mit einer Dichte von mindestens 99 % der theoretisch möglichen Dichte, dadurch gekennzeichnet, daß sie aus Siliciumnitridpulvern unter Verwendung von kristallinen Silicaten natürlicher oder synthetischer Herkunft mit Schmelzpunkten im Bereich von 1350°C bis 1950°C als Sinteradditive in Verbindung mit Keimbildnern ausgewählt aus der Gruppe der Metallcarbide mit Schmelzpunkten ab 1500°C durch Sintern mit oder ohne Druckanwendung hergestellt worden sind mit folgender Eigenschaftskombination:

a) Elastizitätsmodul bei Raumtemperatur von < 300 KN/mm²,

b) Kurzzeitbiegefestigkeit bei Raumtemperatur von mindestens 600 N/mm², gemessen nach der 4-Punkt-Methode, die bis 1200°C um weniger als 50 % abfällt und

c) Langzeitbiegefestigkeit, gemessen nach der 4-Punkt-Methode, bei jeweils konstanter Belastung, die durch den daraus berechneten Zahlenwert von > 40 bei 1200°C für den Rißempfindlichkeitsparameter n charakterisiert ist.

2. Verfahren zur Herstellung der polykristallinen Sinterkörper nach Anspruch 1 durch Sintern mit oder ohne Druckanwendung der Siliciumnitridpulver, Sinteradditive und Keimbildner, dadurch gekennzeichnet, daß als Ausgangsmaterial homogene pulvergemische aus mindestens 50 Gew.-% Siliciumnitrid, von dem mindestens 80 Gew.-% in der α-Modifikation vorliegen, mit einem Anteil von Verunreinigugnen in Form von Oxiden und freiem Kohlenstoff von nicht mehr als 4,0 Gew.-%, einer spezifischen Oberfläche von 3 bis 15 m²/g (gemessen nach BET), höchstens 49,5 Gew.-% der kristallinen Silicate und mindestens 0,5 Gew.-% der Carbidkeimbildner mit durchschnittlichen Teilchengrößen von < 2 µm verwendet werden.

3. Verfahren nach Anspruch 2, dadurch gekennzeichnet, daß die kristallinen Silicate ausgewählt aus der Gruppe der Neso-, Soro-, Cyclo-, Ino-, Phyllo- und Tektosilicate mit Ausnahme von Quarz, verwendet werden.

4. Verfahren nach Anspruch 2, dadurch gekennzeichnet, daß die Metallcarbide mit Metallatomen ausgewählt aus den Gruppen 4b, 5b und 6b des Periodischen Systems, sowie Bor und Silicium, verwendet werden.

## Claims

1. Polycrystalline sintered articles comprising at least 50 % by weight of a crystalline silicon nitride phase of which at least 90 % by weight is in the β-modification, and at least one secondary crystalline intergranular silicate phase, and having a density of at least 99 % of the theoretically possible density, characterised in that they have been manufactured by the sintering, with or without the use of pressure, of silicon nitride powders with the use of crystalline silicates of natural or synthetic origin having melting points in the range of from 1350°C to 1950°C as sintering additives in conjunction with nucleus formers selected from the group of metal carbides having melting points of from 1500°C upwards, the sintered articles having the following combination of properties:

a) modulus of elasticity at room temperature of < 300 KN/mm$^2$,

b) short-term bending strength at room temperature, measured according to the 4-point method, of at least 600 N/mm$^2$ which, up to 1200°C, decreases by less than 50 %, and

c) long-term bending strength, measured according to the 4-point method, in each case under constant stress, which is characterised by the numerical value calculated therefrom of > 40 at 1200°C for the crack growth resistance parameter n.

2. Process for the manufacture of polycrystalline sintered articles according to claim 1 by the sintering, with or without the use of pressure, of silicon nitride powders, sintering additives and nucleus formers, characterised in that as starting material there are used homogeneous powder mixtures comprising at least 50 % by weight of silicon nitride of which at least 80 % by weight is in the α-modification, and containing not more than 4.0 % by weight of impurities in the form of oxides and free carbon, and having a specific surface area of from 3 to 15 m$^2$/g (measured according to BET), not more than 49.5 % by weight of crystalline silicates and at least 0.5 % by weight of carbide nucleus formers having average particle sizes of < 2 μm.

3. Process according to claim 2, characterised in that crystalline silicates selected from the group comprising the neso, soro, cyclo, ino, phyllo and tecto silicates, with the exception of quartz, are used.

4. Process according to claim 2, characterised in that metal carbides having metal atoms selected from groups 4b, 5b and 6b of the Periodic Table, and also boron and silicon, are used.

## Revendications

1. Corps frittés polycristallins, consistant en au moins 50 % en poids d'une phase de nitrure de silicium cristallin, dont au moins 90 % en poids sont présents sous la variante ou modification β et en au moins une phase de silicate intergranulaire cristallin secondaire,

ces corps ayant une densité représentant au moins 99 % de la densité théoriquement possible et étant caractérisés en ce qu'ils ont été produits par frittage, avec ou sans application de pression, à partir de poudres de nitrure de silicium, avec utilisation de silicates cristallins naturels ou synthétiques ayant des points de fusion compris entre 1 350°C et 1 950°C, comme additifs de frittage, en combinaison avec des formateurs de germes choisis parmi les carbures de métaux dont les points de fusion partent de 1 500°C, ces corps ayant la combinaison suivante de propriétés: a) un module d'élasticité à la température ambiante inférieur à 300 kN/mm$^2$,

b) une résistance à la flexion de courte durée à la température ambiante d'au moins 600 N/mm$^2$, valeur mesurée selon la méthode des 4 points, et qui diminue de moins de 50 % jusqu'à 1 200°C,

c) une résistance à la flexion de longue durée, mesurée selon la méthode des 4 points, sous charge à chaque fois constante, qui est caractérisée par une valeur mesurée de plus de 40 à 1 200°C pour le paramètre n de sensibilité aux fissures.

2. Procédé pour préparer des corps frittés polycristallins selon la revendication 1, par frittage avec ou sans application d'une pression de poudres de nitrure de silicium, d'additifs de frittage et de formateurs de germes, procédé caractérisé en ce qu'on utilise comme matière de départ des mélanges pulvérulents homogènes constitués d'au moins 50 % en poids de nitrure de silicium dont au moins 80 % en poids sont présents sous la forme ou modification α, et comportant une proportion d'impuretés, sous forme d'oxydes et de carbone libre, n'excédant pas 4,0 % en poids, ayant une surface spécifique de 3 à 15 m$^2$/g (mesurée d'après la méthode BET), 49,5 % en poids, au maximum, des silicates cristallins et au moins 0,5 % en poids du générateur de germes de carbure ayant des grosseurs moyennes de particules inférieures à 2 μm.

3. Procédé selon la revendication 2, caractérisé en ce que les silicates cristallins sont choisis parmi des nésosilicates, des sorosilicates, des cyclosilicates, des inosilicates, des phyllosilicates et des tectosilicates, à l'exclusion du quartz.

4. Procédé selon la revendication 2, caractérisé en ce qu'on choisit les carbures de métaux comportant des atomes de métaux choisis parmi les groupes IVb, Vb et VIb du tableau périodique des éléments, ainsi que parmi le bore et le silicium.